# EUROPEAN PATENT APPLICATION

(11) **EP 2 887 281 A1**
(43) Date of publication of application: **24.06.2015**
(21) Application number: 13198377.7
(22) Date of filing: 19.12.2013
(51) Int. Cl.: G06Q 10/06, G06Q 50/04

(54) **Displaying MES records on a grid in a MES client screen**

(71) Applicant: Siemens Aktiengesellschaft, 80333 München (DE)
(72) Inventor: Noferi, Stefano, 16149 Genova (IT); Belotti, Simone, 16167 Genova (IT)
(74) Representative: Maier, Daniel Oliver

(57) **Abstract**

A method and a system for displaying MES records on a grid in a MES client screen, where the MES records to be displayed are a set of records resulting from a query to a database by the MES client, and the record set is to be displayed via a number of grid pages (100), each grid page (100) displaying a corresponding record subset (102); each grid page (100) can be displayed on the MES screen by selecting given grid pager navigation commands (201), the invention comprising the following:
a) by the MES client, querying the database to retrieve a first subset of MES records from the database;
b) displaying on the MES client screen, a first grid page corresponding to the first retrieved MES record subset;
c) querying the database to count the exact total count of records of the record set to obtain a total exact record count value (202);
d) displaying on said screen, the exact total record count value (202) resulting from item c);
e) displaying on said screen, grid pager navigation commands (201) enabling to display, upon a user selection, another grid page for another corresponding record subset.

## Description

The present invention relates to a method and to a system for displaying MES records on a grid in a MES client screen according to the preamble of claims 1 and 4 respectively.

In the world of industrial automation of today, in order to increase competitiveness, manufacturing companies need to simultaneously reduce time-to-market, increase process visibility and production flexibility, optimize forecasting and scheduling, and reduce scrap, stock levels and downtimes; all while ensuring optimal quality and production efficiency across all global facilities.

Hence in order to meet these demanding goals, manufacturing companies require an integrated IT infrastructure that helps them in coordinating production on a global scale and, if necessary, in real time. The Manufacturing Execution System (MES) is generally known as the IT layer that integrates the business systems (e.g. ERP) and production control systems.

The Siemens Corp. offers a broad range of MES products, under its SIMATIC® product family.

As defined by the Manufacturing Enterprise Solutions Association (MESA International), the MES system "is a dynamic information system that drives effective execution of manufacturing operations", by managing "production operations from point of order release into manufacturing to point of product delivery into finished goods" and by providing "mission critical information about production activities to others across the organization and supply chain via bidirectional communication." The international standard for developing MES systems is commonly referred as ISA-95 or S95.

The functions that a MES system usually includes are resource allocation and status, dispatching production orders, data collection/acquisition, quality management, maintenance management, performance analysis, operations/detail scheduling, document control, labor management, process management and product tracking.

Thus, the goal of MES systems developed by software suppliers is to provide manufacturing companies (the customers) with tools for measuring and controlling production activities with the aim of boosting profitability, increasing productivity, improving quality and process performance to manufacturing plants.

As used herein, a software application is a set of software components developed by software developers to perform some useful actions within a MES system, e.g. monitoring values coming from plant process or controlling a plant device.

Typically, at engineering or configuration time, system engineers flexibly customize MES applications according to the specific manufacturing plant requirements.

Instead, at runtime, MES applications are utilized by end-users who may be plant operators or line responsible personnel.

MES systems are provided with front-end/client GUI applications which may be used by end-users to plan and control manufacturing activities.

MES GUI applications play a key role in bringing together process, quality and business information from various sources into one unified real-time view of the production status of the plant. In fact, MES GUI applications display to the end-user graphical screens which enable overview several parameters or scenarios of the plant activities. Nowadays MES screens are mostly developed in form of web-pages.

In some MES systems, end users request to visualize on a MES client screen MES records through MES grids. A MES grid is a table view of several MES records. A MES record is a self-contained collection of information about a single MES object. In a MES grid, each row represents a MES record and in each column can be displayed field values of the records. MES records are typically stored on a database at the server side and the users, at the client side, may request to visualize MES records in form of grids on a MES client screen. The MES records to be visualized are the result of queries to the database at the server side.

In some manufacturing scenarios, the set of MES records that end users request to visualize via a grid at the MES client screen can include a very large number of records, e.g. several thousands or more.

The typical technique used to display a large amount of MES records on a grid is to implement a pagination of the record set on the database, i.e. by taking only a small subset of the record set at a time and by displaying it in a grid page on a MES screen. When the total records in the record set is a large number, the record set is partitioned in a given number of record subsets each of which is then visualized in a corresponding grid page. The given number of record subsets is the total number of available grid pages and it depends upon the exact total record count value in the set and upon the chosen number of records in a subset.

On the MES screen, it is also displayed a control called grid pager having navigation commands enabling the user select a grid page. The navigation commands may be page numbers, arrows to go to previous and next page, a text box to insert a page number and so on. Beside the grid pager navigation commands, it is often required that also the exact total record count value is computed and displayed so that the user has such information. However, to be able to display the total amount of available records in the record set, another action needs to be performed, i.e. a query to the database for counting the number of total records that are available in the record set resulting from the query. Once such information is available, the grid pager navigation commands can be displayed in a complete form, i.e. by including also the last page value, since only then the exact number of the last viewable grid page can be derived.

Unfortunately, when dealing with large quantities of data, the required time interval for completing the counting operation of the exact total record count value can often prove to be very long, especially when compared to the short time interval required for retrieving the small subset of records to be shown on a grid page, e.g. several seconds compared with less than half a second. The drawback is that the end user has to wait that the counting operation is completed before being able to see and interact with the record subset displayed on the grid page.

A known technique to bypass such problem is to avoid counting all the records of the record set and to assume that there is a huge quantity of them through a rough estimate, whilst enabling the end user to navigate only to the next / previous grid page or a few grid pages ahead / before. When there are a great number of records, it is not likely to reach the end of data. The drawback of this technique is the loss of the information about the exact total number of records and consequently also about the exact total number of available grid pages.

The latter technique can work in various situations, but it is not ideal for a controlled industrial scenario. In fact, there are many situations in manufacturing scenarios where the total number of records is an important and fundamental information required by the MES user in order to monitor the correct behavior of the manufacturing plant. At the same time it is not desirable to let the user wait a long time interval without the ability to interact with the data records.

It is therefore the aim of the present invention to overcome the above mentioned drawbacks, in particular by providing a method and a system for displaying MES records on a grid in a MES client screen providing the information about the exact number of the large quantity of available records in the record set while allowing the user to interact with at least some data records.

The aforementioned aim is achieved by a method and a system for displaying MES records on a grid in a MES client screen, where the MES records to be displayed are a set of records resulting from a query to a database by the MES client, and the record set is to be displayed via a number of grid pages, each grid page displaying a corresponding record subset; each grid page can be displayed on the MES screen by selecting given grid pager navigation commands, the invention comprising the following:
a) by the MES client, querying the database to retrieve a first subset of MES records from the database;
b) displaying on the MES client screen, a first grid page corresponding to the first retrieved MES record subset;
c) querying the database to count the exact total count of records of the record set to obtain a total exact record count value;
d) displaying on said screen, the exact total record count value resulting from item c);
e) displaying on said screen, grid pager navigation commands enabling to display, upon a user selection, another grid page for another corresponding record subset.

In invention embodiments, item b) may preferably comprise displaying on the screen, an image and/or a text notifying the user that the exact total count value of the MES record set is not available yet.

Furthermore, a computer program element can be provided, comprising computer program code for performing steps according to the above mentioned method when loaded in a digital processor of a computing device.

Additionally, a computer program product stored on a computer usable medium can be provided, comprising computer readable program code for causing a computing device to perform the mentioned method.

Embodiments of the invention enable to obtain a fast loading of a first grid page viewable without loosing the information on the exact total count value of the record set.

The invention will now be described in preferred but not exclusive embodiments with reference to the accompanying drawings, wherein:
- Figure 1: is a snapshot taken from an example of a first grid page where the total record count has not been processed yet according to an example embodiment of the present invention;
- Figure 2: is a snapshot taken from an example of a first grid page where the total record count has already been processed according to an example embodiment of the present invention;

At least some embodiments of the present invention addresses the above described issue in which MES records are to be displayed on a grid in a MES client screen.

The MES records to be displayed are a set of records resulting from a query to a database by the MES client. The record set is to be displayed via a number of grid pages, each grid page displaying a corresponding record subset. Each grid page can be displayed on the MES screen by selecting given grid pager navigation commands. The MES client performs a query to the database, preferably at the server side, to retrieve a first subset of MES records from the database so that a first grid page, corresponding to the first retrieved MES record subset, is displayed. As soon as this first grid page is displayed, an image and/or text may preferably be displayed on the screen notifying the user that the total count value of the MES record set is not available yet. The MES client is querying the database to count the total count of records of the record set to obtain an exact total record count value. Advantageously, while such counting query is being performed, the user is able to interact with the MES records of the first record subset. As soon as the counting query is completed, the total record count value which has been computed is displayed on the screen and also the grid pager navigation commands are displayed with the exact total number of grid pages.

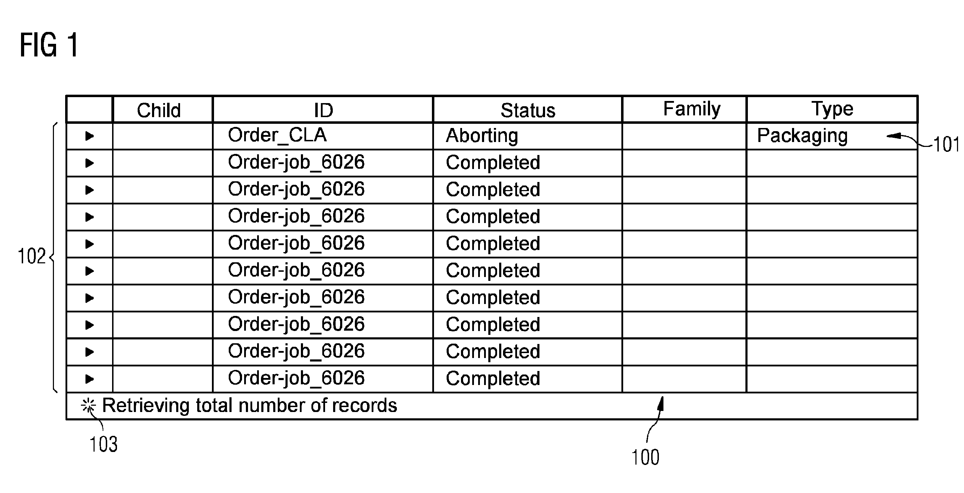

Figure 1 is showing a snapshot taken from an example of a first grid page 100 where the total record count has not been processed yet. The grid page 100 shows a first record subset 100 of MES production orders with their "ID" value and their "Status" value, e.g. "Completing" or "Aborting" and their "Type" value, e.g. "Packaging". The record subset comprises in this example a number of 10 MES records 101. The image 103 shows may be in a form of an animated icon which shows that the total count value has not been computed yet, e.g. by displaying also the notification text "Retrieving total number of records". In this snapshot screen, the grid pager navigation commands are not displayed yet since the total record count value is still under computation. The user is able to interact with the record shown in the page grid 100 but not yet able to switch to other page grids. The user in the meanwhile is advantageously for example able to select a record to be edited or to visualize a detail of a record or send it to production, when possible. The records of the first subset can preferably be the most relevant ones by using for some convenient sorting criteria, for example the orders not yet executed or the orders belonging to a specific production line. In such a way performances of the MES applications are maintained when requesting to display a huge quantity of data records while the counting query is asynchronously performed.

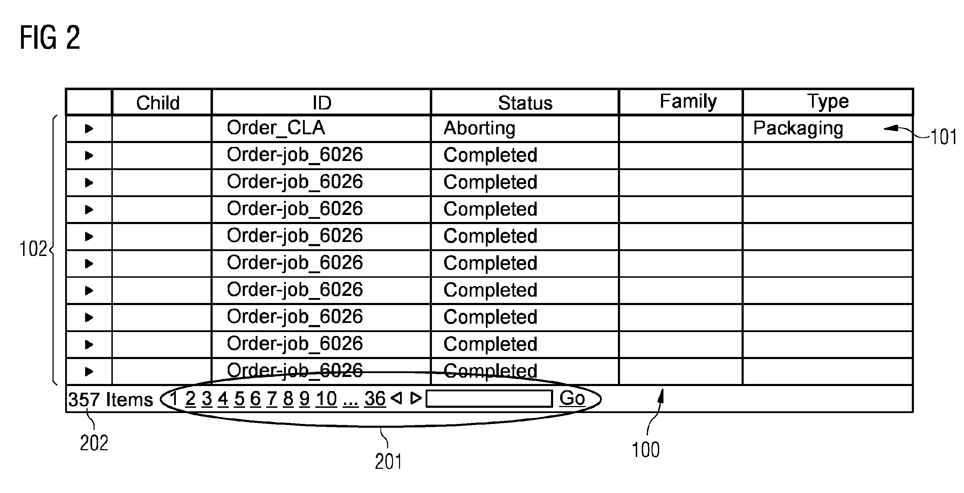

Figure 2 is a snapshot taken from an example of the first grid page where the total record count has already been processed according to the example embodiment of the present invention. The exact total record count value 202 is displayed on the screen without interference with the user's work and also the grid pager navigation commands 201 are displayed including the exact number of grid pages. In this simple example, the record set includes 357 records displayable in 36 grid pages each one including a maximum of 10 records. The user is able by selecting the navigation commands of the grid pager 201 to switch/navigate to other grid pages without any limitations.

## Claims

1. A method for displaying MES records on a grid in a MES client screen, where the MES records (101) to be displayed are a set of records resulting from a query to a database by the MES client, and the record set is to be displayed via a number of grid pages (100), each grid page (100) displaying a corresponding record subset (102); each grid page (100) can be displayed on the MES screen by selecting given grid pager navigation commands (201), the method comprising the following steps:
a) by the MES client, querying the database to retrieve a first subset of MES records from the database;
b) displaying on the MES client screen, a first grid page corresponding to the first retrieved MES record subset;
c) querying the database to count the exact total count of records of the record set to obtain a total exact record count value (202);
d) displaying on said screen, the exact total record count value (202) resulting from step c);
e) displaying on said screen, grid pager navigation commands (201) enabling to display, upon a user selection, another grid page for another corresponding record subset.

2. The method according to claim 1, where step b) comprises the following sub-step:
b1) displaying on said screen, an image and/or a text notifying the user that the exact total count value of the MES record set is not available yet.

3. The method according to any of the previous **characterized in that** it is implemented in software.

4. A system for displaying MES records on a grid in a MES client screen, where the MES records (101) to be displayed are a set of records resulting from a query to a database by the MES client, and the record set is to be displayed via a number of grid pages (100), each grid page (100) displaying a corresponding record subset (102); each grid page (100) can be displayed on the MES screen by selecting given grid pager navigation commands (201), the system comprising the following means:
a) means for querying by the MES client the database to retrieve a first subset of MES records from the database;
b) means for displaying on the MES client screen, a first grid page corresponding to the first retrieved MES record subset;
c) means for querying the database to count the exact total count of records of the record set to obtain a total exact record count value (202);
d) means for displaying on said screen, the exact total record count value (202) resulting from item c);
e) means for displaying on said screen, grid pager navigation commands (201) enabling to display, upon a user selection, another grid page for another corresponding record subset.
